# EUROPÄISCHE PATENTANMELDUNG

(11) **EP 3 556 546 A1**
(43) Veröffentlichungstag der Anmeldung: **23.10.2019**
(21) Anmeldenummer: 18168204.8
(22) Anmeldetag: 19.04.2018
(51) Int. Cl.: B30B 9/30

(54) **MOBILER ROLLVERDICHTER UND HANDHABUNGSVERFAHREN**

(71) Anmelder: Heinz Bergmann e.Kfm. Maschinen für die Abfallwirtschaft, 49762 Lathen (DE)
(72) Erfinder: Bergmann, Heinrich, 49762 Lathen (DE)
(74) Vertreter: Philipp, Matthias

(57) **Zusammenfassung**

Mobiler Rollverdichter (1) mit einem Grundrahmen (10), an dem eine drehantreibbare Verdichtungswalze (12) gelenkig gelagert ist, mit einer ersten Ankoppeleinrichtung (40) zum lösbaren Koppeln des Rollverdichters (1) an einen Abfallcontainer (32), und mit einer zweiten Ankoppeleinrichtung (70) zum lösbarem Koppeln des Rollverdichters (1) an eine Hubeinrichtung (26) eines Transportfahrzeugs (4) sowie Handhabungsverfahren zur Verwendung des Rollverdichters (1).

## Beschreibung

Die Erfindung bezieht sich auf einen mobilen Rollverdichter mit einem Grundrahmen, an dem eine drehantreibbare Verdichtungswalze gelenkig gelagert ist, wie er beispielsweise aus der WO03/101716 A1 bekannt ist, sowie auf ein Handhabungsverfahren.

Die bekannte Vorrichtung muss allerdings zum Betrieb auf die Ladefläche eines Lastkraftwagens gezogen werden, was umständlich und zeitraubend ist.

Die Aufgabe der Erfindung besteht darin, einen verbesserten mobilen Rollverdichter bereitzustellen, der flexibel und ohne großen Aufwand zur Verdichtung von in einem Abfallcontainer enthaltenem Material genutzt werden kann.

Diese Aufgabe wird erfindungsgemäß durch die Maßnahmen gelöst, dass eine erste Ankoppeleinrichtung zum lösbaren Koppeln des Rollverdichters an einen Abfallcontainer und eine zweite Ankoppeleinrichtung zum lösbaren Koppeln des Rollverdichters an eine Hubeinrichtung eines Transportfahrzeugs vorgesehen ist.

Günstigerweise sind die Ankoppeleinrichtungen an einander gegenüberliegenden Seiten des Grundrahmens angeordnet. Die ersten Ankoppeleinrichtung ist in einer ersten Ankoppelrichtung ankoppelbar, und die zweite Ankoppeleinrichtung ist in einer entgegengesetzten zweiten Ankoppelrichtung ankoppelbar.

Das Transportfahrzeug kann beispielsweise ein Gabelstapler oder sonstiges Flurförderzeug sein, das mittels der zweiten Ankoppeleinrichtung kraft- und/oder formschlüssig mit dem Rollverdichter, insbesondere mit dem Grundrahmen, gekoppelt werden kann, wodurch eine feste Verbindung mit der Hubeinrichtung des Transportfahrzeugs und dem Rollverdichter bzw. dem Grundrahmen hergestellt wird. Sodann kann der Rollverdichter mittels des Transportfahrzeugs zu einem Abfallcontainer gefahren und dort mittels der ersten Ankoppeleinrichtung mit dem Abfallcontainer gekoppelt werden. Durch die erste Ankoppeleinrichtung wird eine form- und/oder kraftschlüssige, feste Verbindung mit dem Abfallcontainer hergestellt. Anschließend kann die zweite Ankoppeleinrichtung gelöst werden, wobei der Rollverdichter bzw. der Grundrahmen durch die erste Ankoppeleinrichtung fest mit dem Abfallcontainer verbunden bleibt, und das Transportfahrzeug kann entfernt werden.

Der Rollverdichter ist mit einem Antriebsmotor für die Verdichtungswalze versehen, wobei es sich um einem Gas- oder Dieselmotor oder auch um einen Elektromotor handeln kann. Der Rollverdichter kann eine wieder aufladbare Batterie für den Elektromotor umfassen, oder alternativ kann ein Elektroanschluss zur Verbindung mit einer vorhandenen Stromversorgung vorgesehen sein.

Der Rollverdichter verfügt weiterhin über eine Steuerung, mit der die gelenkig gelagerte Verdichtungswalze innerhalb des Abfallcontainers entlang eines vorgegebenen Wegs oder entsprechend eines vorgegebenen Verdichtungsprogramms hin- und herbewegt wird, während einer vorbestimmten Verdichtungszeit oder bis eine vorbestimmte Verdichtungsqualität erreicht ist.

Bevorzugt ist die erste Ankoppeleinrichtung zum Koppeln an einen Aufnahmebügel des Abfallcontainers ausgebildet. Zweckmäßigerweise weist die erste Ankoppeleinrichtung einen Koppelhaken zum Zusammenwirken mit dem Aufnahmebügel auf. Der Koppelhaken kann eine nach oben offene Ausnehmung zur Aufnahme des Aufnahmebügels aufweisen. Dabei kann vorgesehen sein, dass die erste Ankoppeleinrichtung einen nach oben offenen hakenförmigen Vorsprung zum Untergreifen einer Stirnwand des Abfallcontainers, an der der Aufnahmebügel angeordnet ist, oder zum Untergreifen eines unter der Stirnwand angeordneten Querträgers aufweist.

In einer alternativen Variante kann vorgesehen sein, dass der Koppelhaken eine nach unten offene Ausnehmung zum Aufnehmen des Aufnahmebügels aufweist. In diesem Fall kann die erste Ankoppeleinrichtung einen nach unten offenen hakenförmigen Vorsprung zum Übergreifen einer Stirnwand des Abfallcontainers, an der der Aufnahmebügel angeordnet ist, oder eines über der Stirnwand angeordneten Querträgers aufweisen.

Wenn der Koppelhaken eine nach oben offene Ausnehmung aufweist, ist der hakenförmige Vorsprung unterhalb des Koppelhakens angeordnet, und wenn der Koppelhaken eine nach unten offene Ausnehmung aufweist, ist der hakenförmige Vorsprung oberhalb des Koppelhakens angeordnet.

Der Koppelhaken und/oder der hakenförmige Vorsprung kann bzw. können fest mit dem Grundrahmen verbunden sein.

Die zweite Ankoppeleinrichtung ist zweckmäßigerweise zum Koppeln mit einer Hubplatte eines Gabelstaplers ausgebildet. Die zweite Ankoppeleinrichtung kann einen nach unten offenen hakenförmigen Vorsprung zum Zusammenwirken mit einem oberen Randabschnitt der Hubplatte aufweisen. Alternativ kann die zweite Ankoppeleinrichtung einen Vorsprung zum Zusammenwirken mit einem mit der Hubplatte verbundenen Anhebehaken aufweisen.

Die erste Ankoppeleinrichtung kann eine erste Verriegelungseinrichtung umfassen, mit der die erste Ankoppeleinrichtung in einem an den Abfallcontainer gekoppelten Zustand verriegelbar ist. Bevorzug ist vorgesehen, dass die erste Verriegelungseinrichtung selbsttätig verriegelt, wenn die erste Ankoppeleinrichtung mit dem Abfallcontainer gekoppelt ist. Hierzu kann vorgesehen sein, dass die erste Verriegelungseinrichtung einen um eine erste Schwenkachse schwenkbaren ersten Verriegelungshebel aufweist, der in einer Verriegelungsstellung in seitlicher Ansicht die Ausnehmung des Koppelhakens überdeckt oder anders gesagt den Aufnahmebügeln in der Ausnehmung zurückhält, wobei der erste Verriegelungshaken in Richtung der Verriegelungsstellung feder- oder gewichtsbelastet sein kann.

Der erste Verriegelungshebel kann durch eine Hub- oder Schwenkbewegung der Hubvorrichtung des Transportfahrzeugs, insbesondere der Hubplatte eines Gabelstaplers, betätigbar sein.

Es kann vorgesehen sein, dass die zweite Ankoppeleinrichtung eine zweite Verriegelungseinrichtung umfasst, mit der die zweite Ankoppeleinrichtung in einem an die Hubeinrichtung des Transportfahrzeugs gekoppelten Zustand verriegelbar ist. Die zweite Verriegelungseinrichtung kann selbsttätig verriegeln, wenn die zweite Ankoppeleinrichtung mit der Hubeinrichtung gekoppelt ist.

Die zweite Verriegelungseinrichtung kann einen um eine zweite Schwenkachse schwenkbaren zweiten Verriegelungshebel aufweisen, der in einer Verriegelungsstellung mit der Hubeinrichtung zusammenwirkt. Der zweite Verriegelungshebel kann in Richtung der Verriegelungsstellung feder- oder gewichtsbelastet sein.

Es kann vorgesehen sein, dass die erste Verriegelungseinrichtung durch eine vorgegebene Schwenk- oder Hubbewegung der Hubeinrichtung des Transportfahrzeugs in die und aus der Verriegelungsstellung bringbar ist. Beispielsweise kann die Hubeinrichtung um einen vorgegebenen Winkelbereich um eine horizontale Achse schwenkbar sein, um die erste Verriegelungseinrichtung entsprechend zu betätigen. Bei einer solchen Ausführungsform kann ein Verriegelungshebel vorgesehen sein, der um eine horizontale Schwenkachse an dem Grundrahmen gehalten ist und mit einem ersten Hebelarm oder -bereich mit dem Aufnahmebügel zusammenwirken kann, um den Rollverdichter an dem Abfallcontainer zu verriegeln, und mit einem zweiten Hebelarm oder -bereich mit der Hubeinrichtung zusammenwirken kann, um den Verriegelungshebel in die und aus der Verriegelungsstellung zu bewegen. Zu diesem Zwecke kann der Verriegelungshebel ein erstes Rastelement aufweisen, das mit einem zweiten Rastelement, das an der Hubeinrichtung angebracht ist, zusammenwirken kann. Weiterhin kann die Hubeinrichtung einen Anhebehaken aufweisen, der mit einem Vorsprung am Grundrahmen zusammenwirken kann, um den Rollverdichter aufzunehmen bzw. anzuheben.

Die Erfindung betrifft ferner ein Handhabungsverfahren zur Verwendung eines erfindungsgemäßen Rollverdichters, bei dem ein Transportfahrzeug, das mit einer Hubeinrichtung versehen ist, mittels der zweiten Ankoppeleinrichtung lösbar mit dem Rollverdichter gekoppelt wird, der Rollverdichter durch das Transportfahrzeug zu einem Abfallcontainer gefahren wird, der Rollverdichter mittels der ersten Ankoppeleinrichtung mit dem Abfallcontainer lösbar gekoppelt wird und das Transportfahrzeug durch Lösen der zweiten Ankoppeleinrichtung von dem Rollverdichter gelöst wird, oder in umgekehrter Reihenfolge das Transportfahrzeug mit dem an dem Abfallcontainer angekoppelten Rollverdichter gekoppelt wird, der Rollverdichter durch Lösen der ersten Ankoppeleinrichtung von dem Abfallcontainer entkoppelt wird und das Transportfahrzeug den Rollverdichter von dem Abfallcontainer wegbewegt. Nach dem Koppeln der ersten Ankoppeleinrichtung kann die erste Verriegelungseinrichtung verriegelt werden, wobei dies entweder selbsttätig erfolgen kann oder aber manuell oder durch eine mechanische oder elektrische Betätigungseinrichtung. Nach dem Ankoppeln der zweiten Ankoppeleinrichtung kann die zweite Verriegelungseinrichtung verriegelt werden, wobei dies entweder selbsttätig erfolgen kann oder aber manuell oder durch eine mechanische oder elektrische Betätigungseinrichtung. Zweckmäßigerweise wird nach dem Ankoppeln des Rollverdichters an dem Abfallcontainer mit dem Verdichten des in dem Abfallcontainer befindlichen Materials begonnen, wobei insbesondere die Bewegungen der Verdichtungswalze von der Steuerung gesteuert werden.

Es kann vorgesehen sein, dass der Rollverdichter vor dem Ankoppeln an das Transportfahrzeug an einem Haltegestell mittels der ersten Ankoppeleinrichtung angekoppelt ist und nach Lösen der ersten Ankoppeleinrichtung davon abgenommen wird, nachdem der Rollverdichter an das Transportfahrzeug gekoppelt worden ist, und/oder dass der Rollverdichter nach dem Abkoppeln von dem Abfallcontainer mittels der ersten Ankoppeleinrichtung an ein Haltegestell angekoppelt wird, bevor die zweite Ankoppeleinrichtung gelöst wird.

Die Erfindung wird nachfolgend unter Bezugnahme auf eine Zeichnung erläutert, wobei
Fig. 1 bis 7 mehrere unterschiedliche Koppel- und Verriegelungsstellungen einer ersten Ausführungsform eines mobilen Rollverdichters an einem Abfallcontainer und einem Gabelstapler erläutern, und
Fig. 8 bis 13 mehrere unterschiedliche Koppel- und Verriegelungsstellungen einer zweiten Ausführungsform eines mobilen Rollverdichters erläutern.

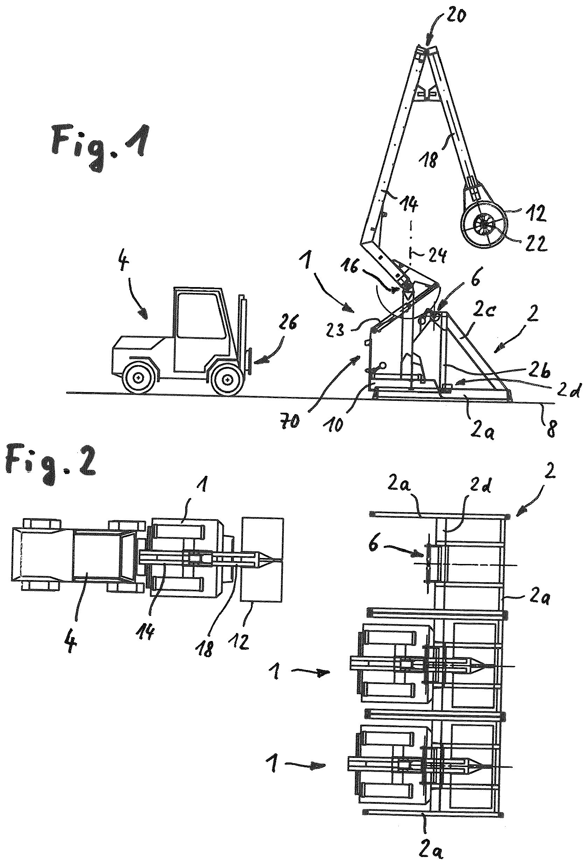

Fig. 1 bis 7 erläutern eine erste Ausführungsform der Erfindung. Fig. 1 zeigt in einer Seitenansicht und Fig. 2 in einer Draufsicht einen bzw. mehrere Rollverdichter 1, die an einem Haltegestell 2 angekoppelt und geparkt sind, bis sie zur Verwendung von einem Transportfahrzeug 4, etwa in Form eines Gabelstaplers, aufgenommen und zum Einsatz an einen Abfallcontainer gebracht werden. Das Haltegestell 2 kann modulartig aufgebaut sein und besteht aus horizontalen Trägern 2a, vertikal angeordneten Trägern 2b und schrägen Aussteifungen 2c, wobei in jedem Modul an den vertikalen Trägern 2b ein horizontaler Aufnahmebügel 6 angebracht ist, der jeweils einem üblichen Aufnahmebügel eines Abfallcontainers entspricht und der Ankopplung jeweils eines Rollverdichters 1 an einem Modul des Haltegestells 2 dient.

Weiterhin besitzt das Haltegestell Querträger 2d, die mit Abstand oberhalb eines horizontalen Untergrunds 8 angeordnet sind und ebenfalls der Ankopplung jeweils eines Rollverdichters 1 dienen, wie noch erläutert wird.

Der Rollverdichter 1 weist einen Grundrahmen 10 auf, an dem eine drehantreibbare Verdichtungswalze 12 gelenkig gelagert ist. Zu diesem Zwecke ist zwischen dem Grundrahmen und der Verdichtungswalze zumindest ein Gelenkarm angeordnet. In dem dargestellten Ausführungsbeispiel sind zwei Gelenkarme vorgesehen, wobei ein erster, abgewinkelter Gelenkarm 14 um eine erste, horizontale Gelenkachse 16 schwenkbar an dem Grundrahmen 10 angelenkt ist und ein zweiter Gelenkarm 18 um eine zweite, horizontale Gelenkachse 20 schwenkbar an dem ersten Gelenkarm 14 angelenkt ist, und die Verdichtungswalze 12 an einem freien Ende des zweiten Gelenkarms 18 angebracht ist. Die Verdichtungswalze 12 ist um eine horizontale Drehachse 22 durch einen nicht dargestellten Antriebsmotor in einer oder zwei entgegengesetzten Drehrichtungen drehantreibbar.

Eine Betätigungseinrichtung 23, beispielsweise in Form eines Hydraulikstempels, ist zwischen dem Grundrahmen 10 und dem ersten Gelenkarm 14 angeschlossen und ermöglicht eine gesteuerte Schwenkbewegung des ersten Gelenkarms 14 relativ zu dem Grundrahmen 10.

Eine weitere, nicht dargestellte Betätigungseinrichtung erlaubt eine gesteuerte Schwenkbewegung des zweiten Gelenkarms 18 relativ zu dem ersten Gelenkarm 14. Weiterhin ist der erste Gelenkarm 14 um eine vertikale Drehachse 24 relativ zu dem Grundrahmen 10 drehbar, mittels einer nicht dargestellten Betätigungseinrichtung, so dass die Verdichtungswalze 12 innerhalb eines weiten räumlichen Bereichs bewegt werden kann.

Fig. 2 zeigt das Transportfahrzeug 4, das einen Rollverdichter 1 aufgenommen und von dem Haltegestell 2 abgenommen hat, während sich zwei weitere Rollverdichter 1 in Parkstellung angekoppelt an dem Haltegestell 2 befinden.

Die Rollverdichter 1 sind hierbei mittels einer ersten Ankoppeleinrichtung 40 an dem Haltegestell 2 gehalten. Zur Übernahme durch das Transportfahrzeug 4 koppelt dieses eine Hubeinrichtung 26, beispielsweise eine bei Gabelstaplern übliche Hubplatte, mittels einer zweiten Ankoppeleinrichtung 70 fest mit dem Rollverdichter 1 oder mit dessen Grundrahmen 10 und löst den Rollverdichter 1 von dem Haltegestell 2.

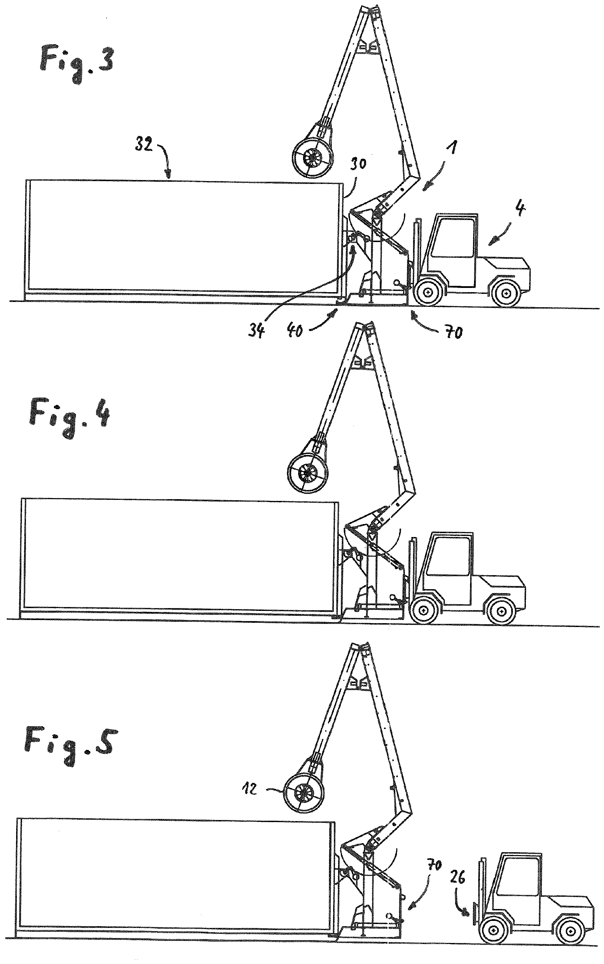

Fig. 3 zeigt in einer Seitenansicht, wie das Transportfahrzeug 4 den daran angekoppelten Rollverdichter 1 vor einer Stirnwand 30 eines Abfallcontainers 32 positioniert. An der Stirnwand 30 des Abfallcontainers 32 ist in üblicher Weise ein Aufnahmebügel 34 befestigt, der entsprechend dem Aufnahmebügel 6 des Haltegestells 2 dimensioniert ist. Wie Fig. 3 und 4 zeigen und noch im Einzelnen erläutert wird, wird der Rollverdichter 1 durch Anheben mittels des Transportfahrzeugs 4 mittels der ersten Ankoppeleinrichtung 40 an den Abfallcontainer 32 gekoppelt, so dass das Transportfahrzeug 4 von der zweiten Ankoppeleinrichtung entkoppelt und entfernt werden kann.

Der Rollverdichter 1 kann in der in Fig. 5 gezeigten, mittels der ersten Ankoppeleinrichtung 40 an den Abfallcontainer 32 angekoppelten Position mit der Verdichtungswalze 12 in dem Abfallcontainer 32 befindliches Material verdichten, entweder bis eine vorgesehene Verdichtungszeit abgelaufen ist oder bis ein gewünschter Verdichtungsgrad des Materials erreicht ist.

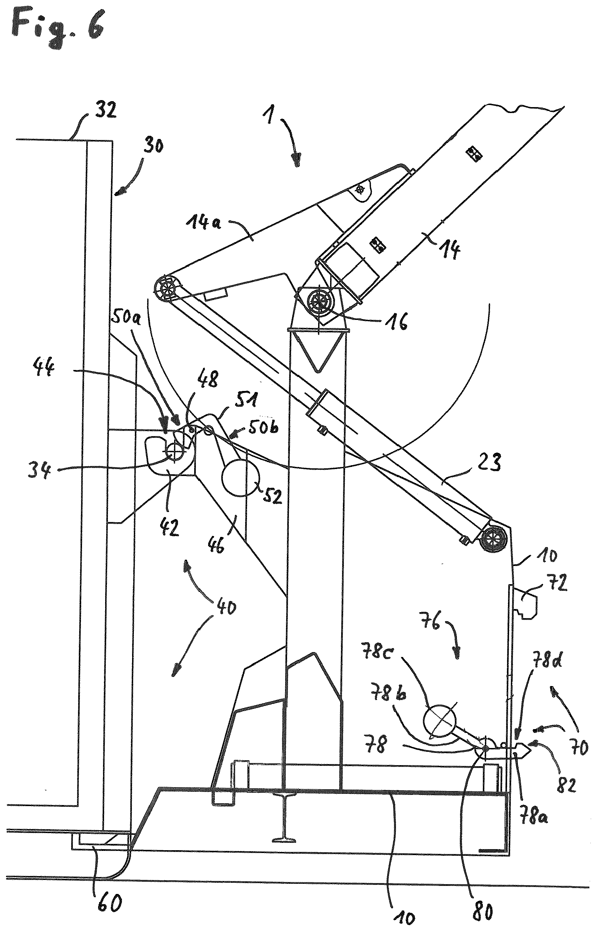

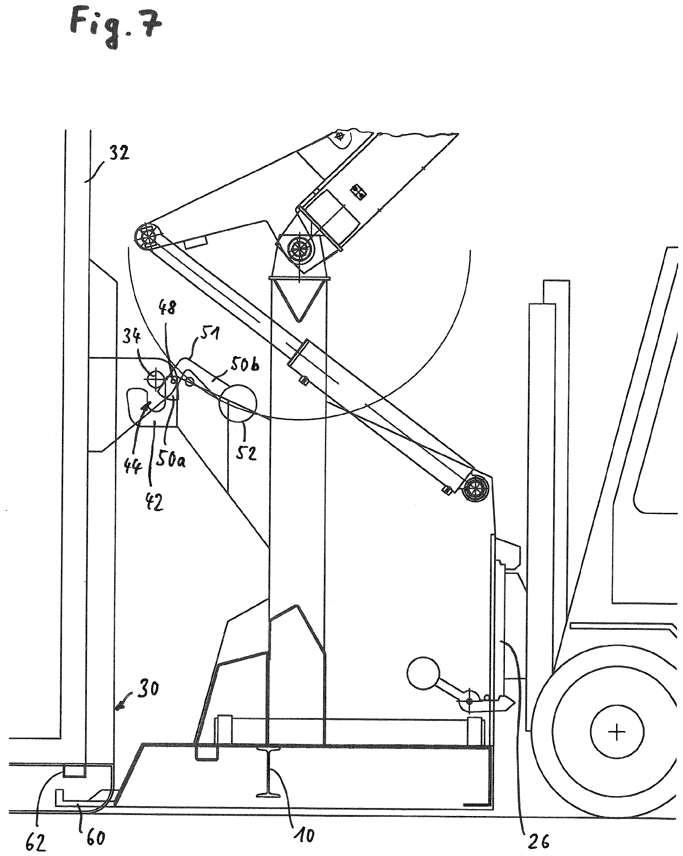

Anhand Fig. 6 und 7 werden die ersten und zweiten Ankoppeleinrichtungen 40, 70 und deren Funktion im Einzelnen erläutert. Fig. 6 zeigt den Grundrahmen 10 des Rollverdichters 1, an dessen oberen Ende der erste Gelenkarm 14 um die erste Gelenkachse 16 drehbar angelenkt ist. Die erste Betätigungseinrichtung 23 erstreckt sich zwischen dem Grundrahmen 10 und einem mit dem ersten Gelenkarm 14 fest verbundenen Betätigungshebel 14a.

Die im Ganzen mit 40 bezeichnete erste Ankoppeleinrichtung umfasst einen Koppelhaken 42, der eine nach oben offene Ausnehmung 44 aufweist, die der Aufnahme eines an der Stirwand 30 des Abfallcontainers 32 angebrachten Aufnahmebügels 34 dient. Der Koppelhaken 42 ist an einer Auskragung 46 des Grundrahmens 10 gehalten. Im Bereich des Koppelhakens 42 ist ein um eine erste horizontale Schwenkachse 48 schwenkbarer erster Verriegelungshebel 51 schwenkbar gehalten, der in einer Verriegelungsstellung den Aufnahmebügel 34 in der Ausnehmung 44 des Koppelhakens 42 zurückhält, wie Fig. 6 zeigt, und in einer Entriegelungsstellung gemäß Fig. 7 einen Eintritt des Aufnahmebügels 34 in die Ausnehmung 44 des Koppelhakens 42 zulässt.

In der dargestellten Ausführungsform ist der erste Verriegelungshebel 51 zweiarmig ausgebildet, wobei ein erster Hebelarm 50a mit dem Aufnahmebügel 34 zusammenwirkt, während ein zweiter Hebelarm 50b ein Gewicht 52 trägt, so dass der Verriegelungshebel 51 in Richtung auf die Verriegelungsstellung (Fig. 6) gewichtsbelastet ist. Der Verriegelungshebel 51 bildet in dieser Ausführungsform eine erste Verriegelungseinrichtung 50.

Die erste Ankoppeleinrichtung 40 umfasst weiterhin einen nach oben offenen hakenförmigen Vorsprung 60 zum Untergreifen der Stirnwand 30 oder eines Querträgers 62, der unterhalb der Stirnwand 30 des Abfallcontainers 32 verläuft. Der hakenförmige Vorsprung 60 kann beispielsweise durch ein nach oben offenes U- oder L-Profil gebildet sein, dass an dem Grundrahmen 10 des Rollverdichters 1 befestigt ist.

Die zweite Ankoppeleinrichtung ist im Ganzen mit 70 bezeichnet und umfasst im Wesentlichen ein an dem Grundrahmen 10 befestigtes Querprofil oder einen Querträger 72, der von der Hubeinrichtung oder Hubplatte 26 des Transportfahrzeugs 4 untergriffen werden kann (Figur 7) und ermöglicht, dass das Hubtransportfahrzeug 4 den Rollverdichter 1 anhebt, von dem Haltegestell 2 löst und zu einem gewünschten Abfallcontainer 32 bringt, oder umgekehrt.

Die zweite Ankoppeleinrichtung 70 umfasst eine zweite Verriegelungseinrichtung 76, die einen zweiten Verriegelungshebel 78 aufweist. Dieser ist um eine zweite, horizontale Schwenkachse 80 schwenkbar gelagert.

Der zweite Verriegelungshebel 78 weist in der dargestellten Ausführungsform einen ersten Hebelarm 78a auf, der mit der Hubeinrichtung bzw. der Hubplatte 26 des Transportfahrzeugs 4 zusammenwirkt, wobei der erste Hebelarm 78a in diesem Beispiel die Hubplatte hintergreift und an dem Grundrahmen 10 verriegelt. Weiterhin umfasst der zweite Verriegelungshebel 78 einen zweiten Hebelarm 78b, der mit einem Gewicht 78c versehen ist, so dass der zweite Verriegelungshebel 78 federbelastet in Richtung auf die Verriegelungsstellung ist. Alternativ kann der Verriegelungshebel 78 federbelastet sein.

Anhand der vorstehenden Erläuterungen zu Figur 6 und 7 wird der Ankoppelvorgang des Rollverdichters an das Haltegestell 2 bzw. an den Abfallcontainer 32 deutlich. Das Haltegestell ist insoweit dem Abfallcontainer nachgebildet und umfasst einen Aufnahmebügel 6, der dem Aufnahmebügel 34 des Abfallcontainers entspricht, und einen Querträger 8, der dem Querträger 62 des Abfallcontainers 32 hinsichtlich Position relativ zum Aufnahmebügel und hinsichtlich der Abmessungen entspricht. Dadurch kann die erste Ankoppeleinrichtung 40 mit dem Koppelhaken 42 entweder den Aufnahmebügel 6 des Haltegestells 2 oder den Aufnahmebügel 34 des Abfallcontainers 32 erfassen. Außerdem kann der hakenförmige Vorsprung 60 der ersten Ankoppeleinrichtung 40 des Rollverdichters 1 entweder den Querträger 8 des Haltegestells 2 oder den Querträger 62 des Abfallcontainers 32 untergreifen, entsprechend Figur 6, 7.

Der Ankoppelvorgang erfolgt gemäß Figur 3 und Figur 6, 7 so, dass das Transportfahrzeug 4 den Rollverdichter 1 in eine Position unmittelbar benachbart zu der Stirnwand 30 des Abfallcontainers 32 bringt (Figur 3, 7) und dann geringfügig anhebt, so dass der Koppelhaken 42 mit dem Aufnahmebügel 34 und der hakenförmige Vorsprung 60 mit dem Querträger 62 zusammenwirkt. Entsprechendes gilt für den Ankoppelvorgang an das Haltegestell 2. Beim Anheben wird der erste Verriegelungshebel 51 der ersten Verriegelungseinrichtung 50 selbsttätig durch den Aufnahmebügel 34 um die erste Schwenkachse 48 verschwenkt, um die Ausnehmung 44 freizugeben, wie Figur 7 zeigt. Nach dem vollständigen Anheben des Rollverdichters 1 und dem Eintreten des Aufnahmebügels 34 in die Ausnehmung 44 des Koppelhakens 42 schwenkt der erste Verriegelungshebel 51 aufgrund des am zweiten Hebelarm 50b angebrachten Gewichts 52 selbsttätig um die erste Schwenkachse 48 zurück, so dass der erste Hebelarm 50a die Ausnehmung 44 des Koppelhakens 42 unmittelbar oder in seitlicher Projektion, sofern der Verriegelungshaken 51 seitlich neben dem Koppelhaken 42 angebracht ist, überdeckt und dadurch ein Lösen des Aufnahmebügels 34 aus der Ausnehmung 44 verhindert (Figur 6). Zum Lösen der Verriegelung ist lediglich der Verriegelungshebel 51 aus seiner Verriegelungsstellung zu schwenken, so dass der erste Hebelarm 50a die Ausnehmung 44 freigibt und der Rollverdichter 1 gegenüber dem Abfallcontainer 32 abgesenkt und von diesem gelöst werden kann.

Die Funktionsweise der zweiten Ankoppeleinrichtung 70 des Rollverdichters 1 ergibt sich anhand Figur 1, 2 und Figur 6, 7. Beim Annähern des Transportfahrzeugs 4 an den Rollverdichter 1 zum Zwecke des Ankoppelns der zweiten Ankoppeleinrichtung 70 befindet sich die Hubeinrichtung oder Hubplatte 26 des Transportfahrzeugs 4 in einer geringfügig abgesenkten Stellung, so dass sich eine Oberkante der Hubeinrichtung oder Hubplatte 26 in Höhe oder unterhalb einer Unterkante des Querprofils oder Querträgers 72 der zweiten Ankoppeleinrichtung 70 befindet. Dadurch kann die Hubplatte bis in Kontakt mit dem Grundrahmen 10 gefahren werden, wobei der zweite Verriegelungshebel 78 entgegen einer Verriegelungsrichtung bewegt wird. Hierzu ist der zweite Verriegelungshebel 78 mit einer Anschrägung 82 versehen, mit der die Hubeinrichtung oder Hubplatte 26 zusammenwirkt und den zweiten Verriegelungshebel 78 in eine Entriegelungsstellung schwenkt. Nachdem die Hubplatte 26 in Zusammenwirken mit dem Querprofil 72 angehoben ist (Figur 7), schwenkt der zweite Verriegelungshebel 78 selbsttätig in seine Verriegelungsstellung und verriegelt mit einem Verriegelungsvorsprung 78d das Transportfahrzeug 4 bzw. die Hubeinrichtung 26 mit dem Rollverdichter 1, der in diesem Zustand von dem Haltegestell 2 oder einem Abfallcontainer 32 abgenommen oder daran angekoppelt werden kann. Zum Lösen des Transportfahrzeugs 4 von dem Rollverdichter 1 ist der zweite Verriegelungshebel 78 in eine Entriegelungsstellung zu bewegen, so dass die Hubplatte 26 von dem Grundgestell 10 gelöst werden kann.

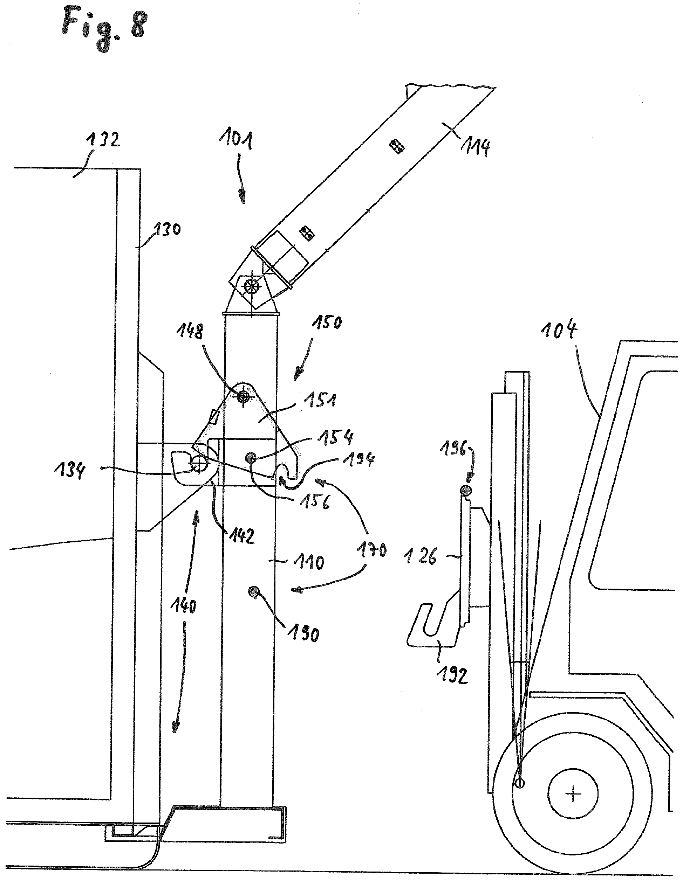

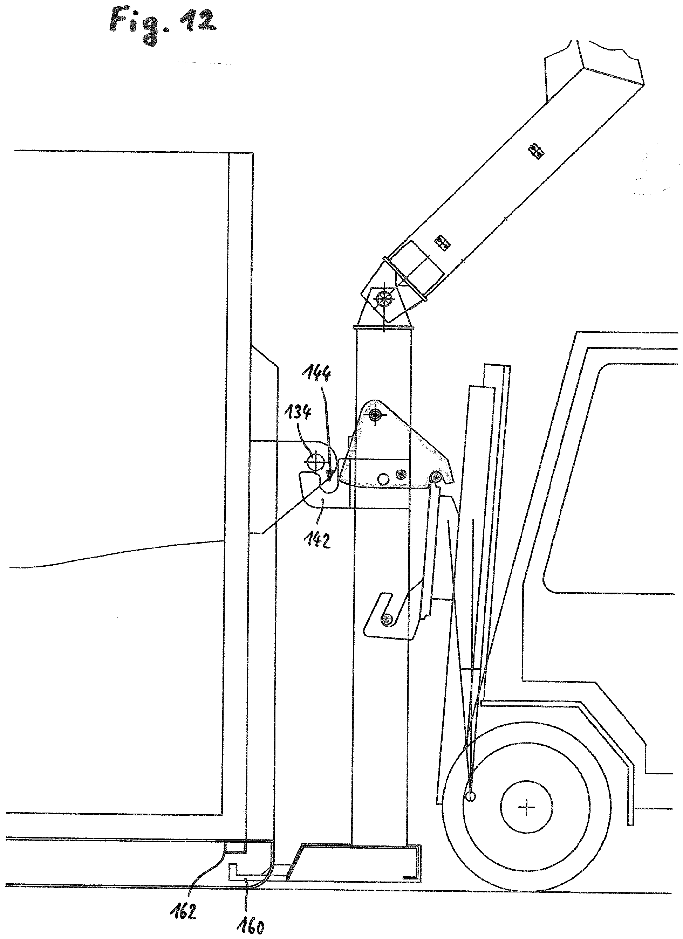

Figur 8 bis 14 erläutern eine zweite Ausführungsform der Erfindung. Die Abbildungen zeigen lediglich einen Teil eines ersten Gelenkarms 114 eines Rollverdichters 101, wobei die Anordnung der Gelenkarme, der Verdichtungswalze und der Betätigungseinrichtungen der Ausführung nach Figur 1 bis 7 entspricht.

Bei der dargestellten zweiten Ausführungsform ist eine erste Ankoppeleinrichtung 140 entsprechend der ersten Ausführungsform ausgebildet. Anstelle des ersten Verriegelungshebels 51 ist bei dieser Ausführungsform eine (erste) Verriegelungseinrichtung 150 mit einem einzigen (ersten) Verriegelungshebel 151 vorgesehen, der um eine Schwenkachse 148 schwenkbar an dem Grundrahmen 110 angelenkt ist. Ein Sicherungsbolzen 154 durchgreift eine Bohrung 156 des Verriegelungshebels 151 sowie eine entsprechende Bohrung im Grundrahmen 110, so dass der Verriegelungshebel 151 in der in Figur 8 dargestellten Verriegelungsstellung gesichert ist. Der Sicherungsbolzen 154 kann zum Zwecke des Abnehmens des Rollverdichters von dem Haltegestell 2 oder dem Abfallcontainer 32 seitlich herausgezogen werden, um eine Verschwenkbewegung des Verriegelungshebels 151 freizugeben.

Die zweite Ankoppeleinrichtung 170 weist in der zweiten Ausführungsform einen zapfenförmigen Vorsprung 190 bzw. zwei entgegengesetzte Vorsprünge auf, der bzw. die mit einem oder zwei Anhebehaken 192 zusammenwirken, der bzw. die an der Hubeinrichtung 26 des Transportfahrzeugs 4 angebracht sind. Die zweite Ankoppeleinrichtung 170 umfasst ferner ein erstes Rastelement 194 in Form einer Ausnehmung, die in dem Verriegelungshebel 151 ausgebildet ist, sowie ein mit dem ersten Rastelement 194 zusammenwirkendes zweites Rastelement, hierbei in Form einer Querstange, die an der Hubeinrichtung 26 befestigt ist und zum Zusammenwirken mit dem ersten Rastelement 194 bestimmt ist.

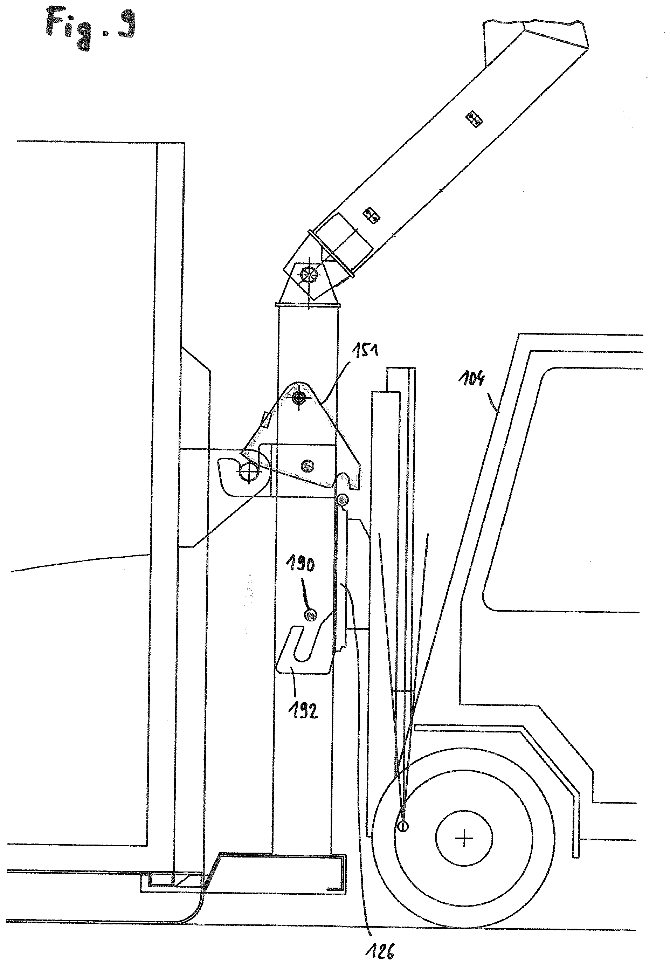

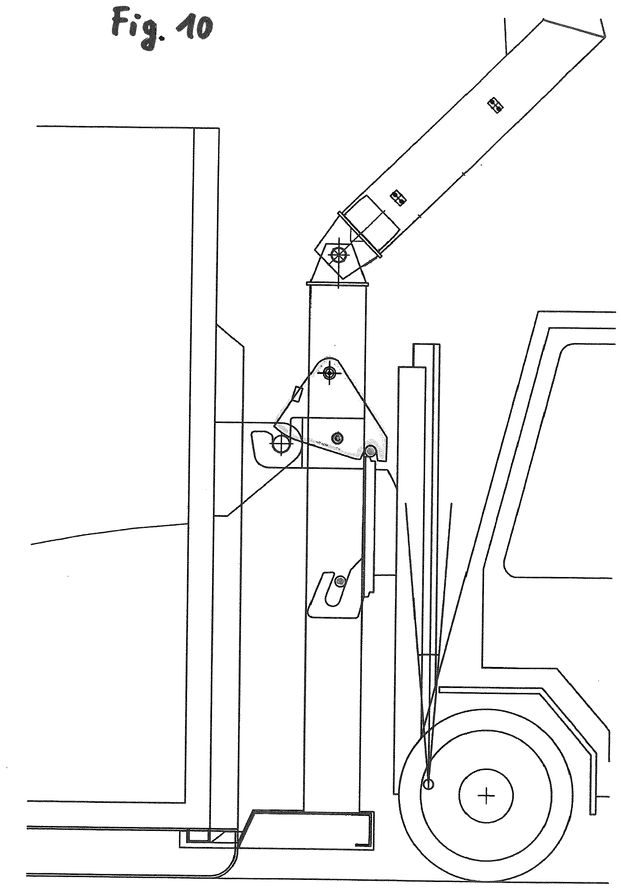

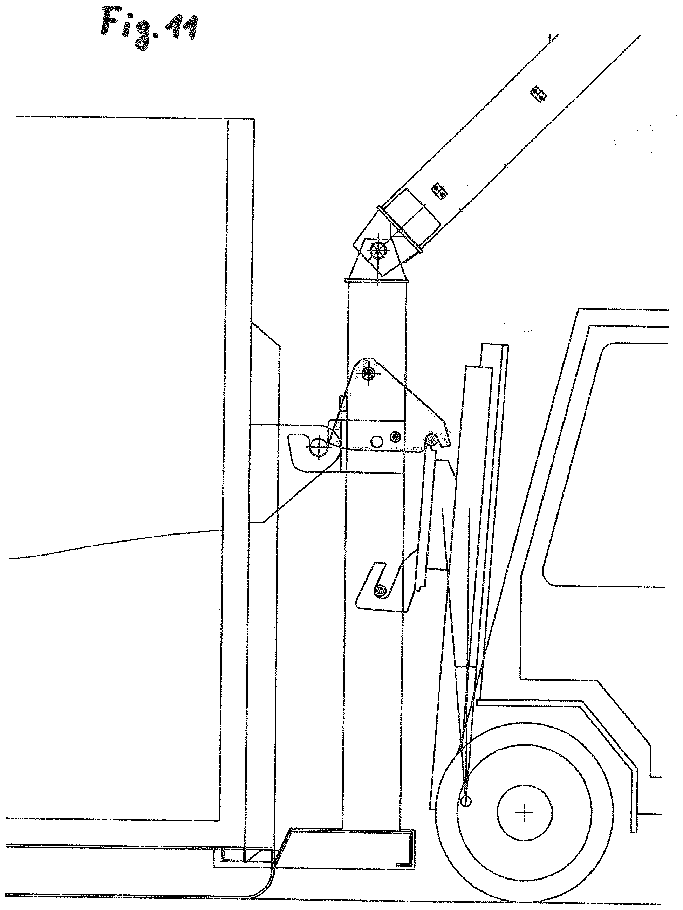

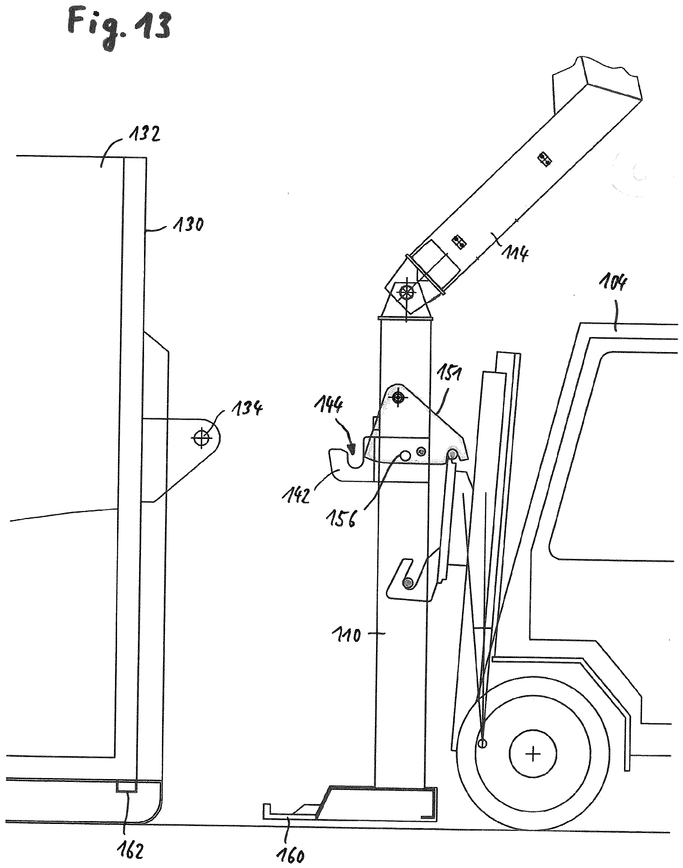

Figur 9 und 10 erläutern das Heranfahren des Transportfahrzeugs 4 und der Hubeinrichtung 26 an den Grundrahmen 110 des Rollverdichters 101 in einer etwas abgesenkten Stellung, sowie das anschließende Hochfahren der Hubeinrichtung 126 bis zum Zusammenwirken mit der zweiten Ankoppeleinrichtung. Anschließend wird gemäß Figur 11 die Hubeinrichtung 126 in eine Neigungsstellung verfahren, wodurch der Verriegelungshebel 151 in eine Entriegelungs- oder Freigabestellung verschwenkt wird, in der der Aufnahmebügel 134 des Abfallcontainers 132 aus der Ausnehmung 144 des Koppelhakens 142 austreten kann. In dieser Entriegelungsstellung wird die Hubeinrichtung 126 zusammen mit dem daran gehaltenen Rollverdichter 101 abgesenkt, so dass die entriegelte erste Ankoppeleinrichtung 140 von dem Abfallcontainer 32 frei kommt (Figur 13) und dieser gemäß Figur 14 von dem Abfallcontainer entfernt und zu dem Haltegestell oder einem anderen Abfallcontainer verbracht werden kann. Daneben erfolgt die Kopplung des hakenförmigen Vorsprungs 160 der ersten Ankoppeleinrichtung 140 mit dem Querträger 162 des Abfallcontainers 132 analog zur ersten Ausführungsform.

## Patentansprüche

1. Mobiler Rollverdichter (1) mit einem Grundrahmen (10), an dem eine drehantreibbare Verdichtungswalze (12) gelenkig gelagert ist, mit einer ersten Ankoppeleinrichtung (40) zum lösbaren Koppeln des Rollverdichters (1) an einen Abfallcontainer (32), und mit einer zweiten Ankoppeleinrichtung (70) zum lösbarem Koppeln des Rollverdichters (1) an eine Hubeinrichtung (26) eines Transportfahrzeugs (4).

2. Mobiler Rollverdichter nach Anspruch 1, **dadurch gekennzeichnet, dass** die erste Ankoppeleinrichtung (40) zum Koppeln an einen Aufnahmebügel (34) des Abfallcontainers (32) ausgebildet ist.

3. Mobiler Rollverdichter nach Anspruch 2, **dadurch gekennzeichnet, dass** die erste Ankoppeleinrichtung (40) einen Koppelhaken (42) zum Zusammenwirken mit dem Aufnahmebügel (34) aufweist.

4. Mobiler Rollverdichter nach einem der vorangehenden Ansprüche, **dadurch gekennzeichnet, dass** die erste Ankoppeleinrichtung (40) einen nach oben offenen hakenförmigen Vorsprung (60) zum Untergreifen einer Stirnwand (30) des Abfallcontainers (32), an der der Aufnahmebügel (34) angeordnet ist, aufweist.

5. Mobiler Rollverdichter nach einem der vorangehenden Ansprüche, **dadurch gekennzeichnet, dass** die zweite Ankoppeleinrichtung (70) zum Koppeln mit einer Hubplatte (26) eines Gabelstaplers ausgebildet ist.

6. Mobiler Rollverdichter nach Anspruch 10, **dadurch gekennzeichnet, dass** die zweite Ankoppeleinrichtung (70) einen nach unten offenen hakenförmigen Vorsprung (72) zum Zusammenwirken mit einem oberen Randabschnitt der Hubplatte (26) aufweist.

7. Mobiler Rollverdichter nach einem der vorangehenden Ansprüche, **dadurch gekennzeichnet, dass** die erste Ankoppeleinrichtung (40) eine erste Verriegelungseinrichtung (50) umfasst, mit der die erste Ankoppeleinrichtung (40) in einem an den Abfallcontainer (32) gekoppelten Zustand verriegelbar ist.

8. Mobiler Rollverdichter nach Anspruch 7, **dadurch gekennzeichnet, dass** die erste Verriegelungseinrichtung (50) selbsttätig verriegelt, wenn die erste Ankoppeleinrichtung (40) mit dem Abfallcontainer (32) gekoppelt ist.

9. Mobiler Rollverdichter nach Anspruch 7 oder 8, **dadurch gekennzeichnet, dass** die erste Verriegelungseinrichtung (50) einen ersten Verriegelungshebel (51) aufweist, der in einer Verriegelungsstellung den Aufnahmebügel (34) in der Ausnehmung (44) des Koppelhakens (42) zurückhält, wobei der erste Verriegelungshebel (51) in Richtung der Verriegelungsstellung feder- oder gewichtsbelastet sein kann.

10. Mobiler Rollverdichter nach Anspruch 9, **dadurch gekennzeichnet, dass** der erste Verriegelungshebel durch eine Hub- oder Schwenkbewegung der Hubeinrichtung (26) des Transportfahrzeugs (4) betätigbar ist.

11. Mobiler Rollverdichter nach einem der vorangehenden Ansprüche, **dadurch gekennzeichnet, dass** die zweite Ankoppeleinrichtung (70) eine zweite Verriegelungseinrichtung (76) aufweist, mit der die zweite Ankoppeleinrichtung (70) in einem an die Hubeinrichtung (26) des Transportfahrzeugs gekoppelten Zustand verriegelbar ist.

12. Mobiler Rollverdichter nach Anspruch 11, **dadurch gekennzeichnet, dass** die zweite Verriegelungseinrichtung selbsttätig verriegelt, wenn die zweite Ankoppeleinrichtung (70) mit der Hubeinrichtung (26) gekoppelt ist.

13. Mobiler Rollverdichter nach Anspruch 11 oder 12, **dadurch gekennzeichnet, dass** die zweite Verriegelungseinrichtung einen um eine zweite Schwenkachse schwenkbaren zweiten Verriegelungshebel (78) aufweist, der in einer Verriegelungsstellung mit der Hubeinrichtung (26) zusammenwirkt.

14. Handhabungsverfahren zur Verwendung eines Rollverdichters nach einem der vorangehenden Ansprüche, bei dem ein Transportfahrzeug (4), das mit einer Hubeinrichtung (26) versehen ist, mittels der zweiten Ankoppeleinrichtung (70) lösbar mit dem Rollverdichter gekoppelt wird, der Rollverdichter durch das Transportfahrzeug (4) zu einem Abfallcontainer (32) gefahren wird, der Rollverdichter mittels der ersten Ankoppeleinrichtung (40) mit dem Abfallcontainer (32) lösbar gekoppelt wird und das Transportfahrzeug (4) durch Lösen der zweiten Ankoppeleinrichtung (70) von dem Rollverdichter gelöst wird, oder in umgekehrter Reihenfolge das Transportfahrzeug (4) mit dem an dem Abfallcontainer (32) angekoppelten Rollverdichter gekoppelt wird, der Rollverdichter durch Lösen der ersten Ankoppeleinrichtung (40) von dem Abfallcontainer (32) entkoppelt wird und der Rollverdichter mittels des Transportfahrzeugs (4) von dem Abfallcontainer (32) wegbewegt wird.

15. Verfahren nach Anspruch 14, **dadurch gekennzeichnet, dass** nach dem Koppeln der ersten Ankoppeleinrichtung (40) die erste Verriegelungseinrichtung (50) verriegelt wird, und/oder dass nach dem Ankoppeln der zweiten Ankoppeleinrichtung (70) die zweite Verriegelungseinrichtung (76) verriegelt wird.
